Europäisches Patentamt

European Patent Office

Office européen des brevets

(11) Publication number: **0 232 000**
A1

## EUROPEAN PATENT APPLICATION

(21) Application number: 87300089.7

(22) Date of filing: 07.01.87

(51) Int. Cl.³: **F 04 F 1/18**
A 01 K 79/00

(30) Priority: 28.01.86 US 823370

(43) Date of publication of application:
12.08.87 Bulletin 87/33

(84) Designated Contracting States:
AT DE ES FR GB GR IT NL SE

(71) Applicant: Breckner, Raymond Anthony
4540 Dallyn Road
Richmond British Columbia, V6X 2Y2(CA)

(72) Inventor: Breckner, Raymond Anthony
4540 Dallyn Road
Richmond British Columbia, V6X 2Y2(CA)

(74) Representative: Gordon, Michael Vincent et al,
GILL JENNINGS & EVERY 53-64 Chancery Lane
London WC2A 1HN(GB)

(54) Method and apparatus for pumping liquid.

(57) An apparatus (10, 64) for pumping liquid has a conduit
(12, 65) to contain the liquid, the conduit having an inlet por-
tion (14, 66), an outlet portion (15, 67) and an apex (18, 68).
The inlet portion is essentially vertical and exposed to liquid,
and the apex interconnects and is disposed above the inlet
and outlet portions. Gas bubbles (57, 118) are discharged up
the inlet portion (14, 66) to the apex (18, 68) so as to reduce
effective density of liquid in the inlet portion. The bubbles are
collected in a gas receiving chamber (28, 90) adjacent an
upper portion of the apex means. Pressure in the apex (18, 68)
is reduced so as to draw liquid up the conduit (12, 65) and to
remove gas adjacent the apex, which gas would otherwise
tend to accumulate from gas bubbles. The outler portion (15,
67) is sealed against atmosphere. The flow of pressurized gas
up the inlet portion (14, 66) is in a quantity sufficient to reduce
effective density of liquid in the inlet portion so as to cause a
flow of liquid from the inlet portion to the outlet portion with
continuous removal of gas from the apex (18, 68). In this way,
the liquid does not pass through moving pump parts, and
thus delicate solids (78) can be transported in the liquid or
heavily contaminated liquid or corrosive liquid can be moved
without contacting moving pump parts.

./...

FIG.1

FIG.2

BRECKNER, Raymond Anthony.     GJE/21/2504/02  0232000

- 1 -

## METHOD AND APPARATUS FOR PUMPING LIQUID

## BACKGROUND OF THE INVENTION

### Field of the Invention

The invention relates to a pump which can be used for pumping liquids or solids suspended in liquid, or for transferring liquids without contact with moving pump parts.

### Prior Art

It is well known to convey discrete solid material or delicate solids by suspending them in a fluid, such as water, to transfer the solid material from one location to another.

Many different types of pumps have been devised, and the solids suspended in the liquid are sometimes damaged by the moving parts of the pump, or by the forces imposed by accelerating or decelerating the solids as they pass through the pump. Some pumps operate on a discontinuous cycle, wherein a vacuum chamber is first exhausted, and then filled with liquid/solid mixture, which is then later discharged by raising pressure in the chamber. The chamber is again exhausted and the cycle is repeated. Discontinuous cycles or processes similar to the above cycle usually require complex controls, and considerable inefficiencies are encountered when alternately exhausting and pressurizing the chamber. Continuous flow pumps which overcome some of the inefficiencies above have been characterized by high pressure fluid jets or vanes, which have been known to damage delicate solids.

A limitation with vacuum pumps is the height to which a vacuum pump can raise liquids. Most liquid or liquid/solid mixtures can be raised by vacuum pumps to a height of about 25 feet. This height can be increased by injecting a gas, usually air, into the pump input pipe thus reducing effective density of the liquid/solid mixture by mixing air with the liquid. However, some of these devices are limited as air from the bubbles tends to accumulate in non-vertical sections of the pipe, and accumulation of such air reduces effective cross-section of the pipe, thus limiting flow of liquid/solid mixture through the pipe adjacent the pipe section where air accumulates.

A fish pump using air injection into a suction input duct is shown in U.S. Patent 2,736,121 issued to Kimmerle. This patent states that the air so admitted forms bubbles and so lessens the weight of the column and permits a higher lift. This patent discloses a rotary valve which adds complications, and may damage delicate fish. Also the input duct has a relatively shallowly inclined section which may trap air, thus reducing effective cross-section of the input duct.

A different application of liquid pumps relates to pumping liquid under relatively low hydrostatic heads from one location to another, for example in pumping dyked drainage areas, so as to reduce flooding. It is known to use large, low head, centrifugal pumps for this application, but, due to soil or other abrasives contaminating the water, such pumps are subjected to excessive wear, necessitating frequent maintainence. While attempts have been made to filter water passing through such pumps, or to utilize pumps in which large clearances can be tolerated, the resulting inefficiency of the pumps have limited their use.

SUMMARY OF THE INVENTION

The invention reduces the difficulties and disadvantages of prior art pumping devices used for handling solids suspended in liquid, or for transferring of contaminated liquid from one location to another. The invention provides an apparatus wherein the liquid being pumped does not pass through moving components of the pump, or is subjected to high pressure forces when being pumped. Furthermore, the liquid is not subjected to large acceleration or deceleration forces and thus delicate solids can be transported easily.

Furthermore, because the liquid does not pass through moving components of the pump, heavily contaminated liquids or corrosive liquids can be handled.

An apparatus according to the invention includes a conduit, aeration means, evacuation means and sealing means. The conduit is adapted to contain liquid and has an inlet portion, an outlet portion and an apex means. The inlet portion is essentially vertical and is exposed to a first body of liquid. The apex means interconnects the inlet and outlet portions and is disposed above the inlet and outlet portions. The apex means also has a gas receiving chamber adjacent an uppermost portion thereof. The aeration means is adapted to receive a supply of pressurized gas, and communicates with the inlet portion to generate and discharge gas bubbles up the inlet portion to the apex means so as to reduce effective density of liquid in the inlet portion. The evacuation means cooperates with the gas receiving chamber of the apex means to reduce pressure in the conduit so as to draw liquid up the conduit. The evacuation means also removes gas adjacent the apex means, which gas would otherwise tend to accumulate from the gas bubbles. The sealing means cooperates with the outlet portion for sealing the conduit against atmosphere.

Preferably gas delivery means cooperate with the aeration means to supply and control flow of pressurized gas to the aeration means in a quantity sufficient to reduce the effective density of liquid up the inlet portion, so as to cause a flow of liquid up the inlet portion to the outlet portion with continuous removal of gas from the apex means. In one embodiment, the sealing means is a second body of liquid in which the outlet means is immersed therein to seal against atmosphere. Preferably, sensing means cooperate with the apex means and are responsive to liquid level in the apex means. Suction valve means cooperates with the evacuation means and the sensing means to control pressure within the conduit so that gas is removed from the conduit in a quantity sufficient to maintain an essentially continuous path of liquid between the inlet portion and the outlet portion so as to cause a flow of liquid from the inlet means to the outlet means, with adequate removal of gas from the apex means.

A method according to the invention is for pumping liquid through a conduit having an inlet portion, an outlet portion and an apex means. As previously stated, the apex means interconnects the inlet and outlet portions and is disposed essentially vertically above the inlet portion and above the outlet portion. The method includes the steps of:

immersing the inlet portion into a first body of liquid so as to seal the inlet portion with the liquid,

sealing the outlet means against atmosphere,

withdrawing gas from the apex means to reduce pressure in the conduit so as to draw a column of liquid essentially vertically up the inlet portion to pass the apex means to form an essentially continuous path of liquid extending between the inlet and outlet portions,

admitting gas bubbles into the inlet portion in an amount sufficient to reduce effective density of at least a portion of the liquid in the inlet portion, so as to induce a flow of liquid and gas up the inlet portions so that the liquid passes the apex means and is discharged through the outlet portion,

essentially simultaneously evacuating gas from the apex means which would otherwise tend to collect from the bubbles, so as to provide the essentially continuous path of liquid which maintains the flow of liquid from the inlet portion to the outlet portion.

The method is further characterized by immersing the outlet means in a second body of liquid, and drawing liquid up the outlet portion from the second body of liquid to assist in forming the continuous path of liquid.

A detailed disclosure following, related to drawings, describes preferred apparatus and methods for practising the invention, which however is capable of expression in method and apparatus other than that particularly described and illustrated.

## DESCRIPTION OF THE DRAWINGS

Figure 1        is a simplified diagram of an apparatus of the invention, shown with outlet means in two different positions,

Figure 2        is a simplified diagram of an alternative apparatus used for transferring solids suspended in liquid from a lower location to a higher location.

## DETAILED DISCLOSURE

### Figure 1

An apparatus 10 according to the invention has a conduit 12 having an inlet portion 14, an outlet portion 15 and an apex means 18. The inlet portion is essentially vertical and has an open lower end 19 exposed to or immersed in a first body of liquid 20. Similarly, the outlet portion 15 has an open lower end 23 immersed in a second body of liquid 24 but, in contrast to the inlet portion, the outlet portion can be inclined to the vertical. The apparatus 10 can be a low head pump for transferring fluids across a dyke shown in broken outline at 25, from the first to second bodies of liquid, which is usually water.

The apex means 18 interconnects the inlet and outlet portions and is disposed vertically above the inlet portion and is above the outlet portion as will be described. The apex means has a gas receiving chamber 28 adjacent an uppermost portion thereof i.e., the portion of the apex means spaced highest above the inlet means contains the gas receiving chamber 28. A suction pump 30 has an inlet duct 31 communicating through a suction port 32 with an uppermost portion of the gas receiving chamber 28. A float 33 is adapted to float on a surface 34 of water within the apex means, broken line, and is mounted on a hinged float arm 35 to respond to changes of liquid level in the apex means. The arm 35 has an inner end 37 hinged to a fixed portion of the apex means and carries a valve member 38 between the float and the end 37. The valve member 38 is of conical shape, and is adapted to close the inlet duct 31 when the float and the arm are in raised positions, not shown. Thus the port 32 has a valve seat complementary to the float controlled valve member 38, and with the related structure, provides a float controlled suction valve means to control removal of gas from the chamber 28. Clearly equivalent float controlled suction valve means can be substituted.

The ends 19 and 23 of the inlet and outlet portions 14 and 15 of the conduit 12 have downwardly facing open ends which are immersed below upper surfaces 43 and 44 respectively of the first and second bodies of liquid 20 and 24. The end 19 has an annular manifold 46 extending therearound and positioned below the surface 43. A plurality of perforations 48 extend through the wall of the lower end 19 of the inlet portion and pass gas from the manifold 46 into the inlet portion 14. An air delivery line 50 connects the manifold 46 to an air compressor 52, which delivers compressed air to the manifold.

OPERATION

In the apparatus 10, liquid in the first body of liquid 20 is to be transferred to the second body 24 through the conduit 12. Initially, because the inside of the conduit is at atmospheric pressure, the level of liquid inside the inlet portion 14 is equal to that outside the portion 14, that is the upper surface 43. Similarly, liquid level inside the conduit outlet portion 15 is equal to the upper surface 44 of the second body of liquid. The pump 30 is started, which immediately starts to reduce pressure within the conduit 12. As pressure within the conduit is reduced, first and second columns of liquid 51 and 53 are drawn from the first and second bodies of liquid respectively up the inlet and outlet portions. Initially the first and second columns would have similar heights shown as broken lines 54 and 55. The air compressor 52 can be started at essentially any time, and the resulting stream of bubbles 57 is ejected from the manifold perforations 48 and passes upwardly through the column 51 within the inlet portion. The stream of bubbles 57 is sufficient to reduce the effective density of liquid in the inlet portion which results in the height of the column 51 exceeding the height of the column 53, the heights being shown as 54.1 and 55.1 for example, as the columns are drawn up the inlet and outlet portions respectively. Gas from the bubbles in the column 51 passes into the gas receiving chamber 28 at the apex means, where it is withdrawn up the inlet duct 31 through the suction pump 30.

Eventually, the column 51 reaches the apex 18, and liquid from the column 51 would tend to flow across the apex means to assist in filling the outlet portion 15, because at this instant, depending on the volume of bubbles discharged by the manifold 46, the height 55 of the column 53 is likely to be below the apex 18. When the column 53 completely fills the outlet portion 15, usually due to flow from the apex means 18, a continuous path of liquid 58 is established and extends between the inlet and outlet portions. As the pump 30 continues to withdraw gas collected from the bubbles 57, liquid level or depth 59 in the path 58 across the apex means will tend to increase. Eventually, the upper surface 34 of liquid within the apex means 18 contacts the float 33, and the float raises with continued rise in the level of liquid in the apex means, so that the valve member 38 tends to close the inlet duct 31. Clearly, if the inlet duct 31 became totally closed by the valve 38, further evacuation of gas from the gas receiving chamber 28 is impossible. Consequently, gas from the bubbles 57 would tend to accumulate in the apex means, which would tend to lower the depth 59 of the liquid 58 within the apex means. As soon as the liquid level started to drop, the float 33 would also drop, thus permitting the valve member 38 to open the inlet duct 31, permitting further removal of gas in the gas receiving chamber. Thus when the float detects an excessively high liquid level in the apex means, the complete or partial closure of the port 32 by the valve member 38 eliminates or reduces rate of removal of gas from the apex means. In practice an equilibrium position is reached wherein gas removed from the chamber 28 would approximately equal gas received in the chamber from the bubbles 57, thus maintaining an equilibrium level of liquid within the apex means 18, which level can be predetermined by adjusting the float. The predetermined level of liquid is well below that which might cause liquid to enter the pump due to surging etc. A water trap (not shown) can be fitted adjacent the inlet duct 31 to protect the pump from accidental entry of water.

Because liquid in the column 53 has a greater density than liquid in the column 51, there would be a flow of liquid from the inlet portion 14, across the apex means 18 and into the outlet portion 15. Clearly this flow would be maintained only as long as there was sufficient depth in the apex means 18 to provide an essentially continuous path of liquid between the inlet and outlet means, and this is dependent on an essentially continuous removal of gas from the apex means.

It can be seen that the perforations 48 of the manifold 46 serve as an aeration means 49 adapted to receive a supply of pressurized gas and to communicate with the inlet portion to generate and discharge gas bubbles 57 up the inlet portion to the apex means so as to reduce effective density of liquid in the apex means. Furthermore, it can be seen that the pump 30 serves as an evacuation means cooperating with the gas receiving chamber 28 of the apex means to reduce pressure in the conduit so as to draw liquid up the conduit and to remove gas adjacent the apex means, which gas would otherwise tend to accumulate from the gas bubbles. Clearly, the second body of liquid 24 serves as a sealing means cooperating with the outlet portion for sealing the conduit against atmosphere. The air compressor 52 and conduit 50 serve as a gas delivery means cooperating with the aeration means to supply and control the flow of pressurized gas to the aeration means in a quantity sufficient to reduce the effective density of liquid in the inlet portion so as to cause the flow of liquid from the inlet portion to the outlet portion with continuous removal of gas from the apex means. The actual volume of gas removed from the receiving chamber 28 is several times greater than the volume delivered at the manifold due to expansion of the gas to a lower pressure. The vacuum pump 30 must have sufficient capacity to remove the maximum output of gas from the compressor 52, taking into consideration the larger volume of flow due to lower pressure of gas in the chamber 28.

Furthermore, it can be seen that the float 33 and the float arm 35 serve as a sensing means cooperating with the apex means so as to be responsive to liquid level in the apex means. The valve member 38 and port 32 serve as suction valve means cooperating with the evacuation means, that is the suction pump 30, and also cooperating with a sensing means, that is the float 33, to control pressure within the conduit. In this manner, gas is removed from the conduit in a quantity sufficient to maintain the essentially continuous path of liquid 58 between the inlet and outlet portions, which enables a flow of mixture from the inlet means to the outlet means, provided there is adequate removal of gas from the apex means.

## ALTERNATIVES AND EQUIVALENTS

The apparatus provides a means of pumping liquid between first and second bodies of liquid, which can be substantially at the same level, and thus is for transferring liquid essentially horizontally. One application of this simplified form of apparatus would be in flood control, where water is transferred from one side of a dyke to the other side.

Because the liquid being transferred does not contact wear sensitive parts or moving parts of the apparatus, the liquid being transferred could be highly contaminated with abrasive solids, or relatively large floating solids and this would have little effect on pumping efficiency. Also, because the liquid does not come into direct contact with the pump itself, for some applications corrosive liquids could be handled, provided the conduit and associated components were made from a suitably inert or corrosion resistant material.

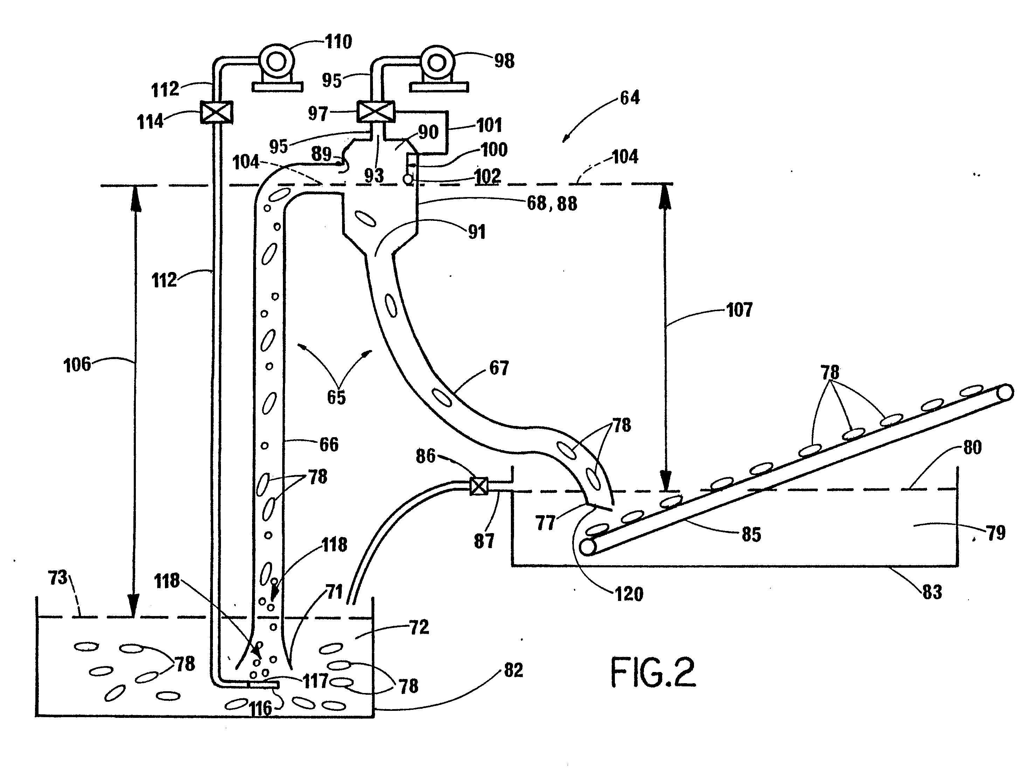

Clearly the sealing means must be able to open to permit flow of water from the outlet portion into the second body of liquid. Also, the second body can be only slightly below the level of the apex means as shown in an alternative position at 24.1. Also, there is a limit to height or vertical distances between the first and second bodies, which is described more fully with reference to Figure 2.

While the outlet means is shown to be sealed by the second body of liquid 24, other means of sealing can be envisaged, such as hinged flap valve 61, shown open in broken outline. This would usually be immersed in liquid also, but closure of the valve 61 would essentially eliminate drawing water up the portion 15. Thus the column 53 would be filled or primed with water from the portion 14. Preferably the flap valve 61 is used in situations where there is a difference in height between the surfaces 43 and 44 of the bodies of liquid. This is to prevent a natural syphon effect that could otherwise occur if there were a power failure which could result in loss of air supply and the bubbles and loss of suction at the pump 30. Without the bubbles in the column 51, a natural syphon would result causing reverse flow back onto the body 20.

**Figure 2**

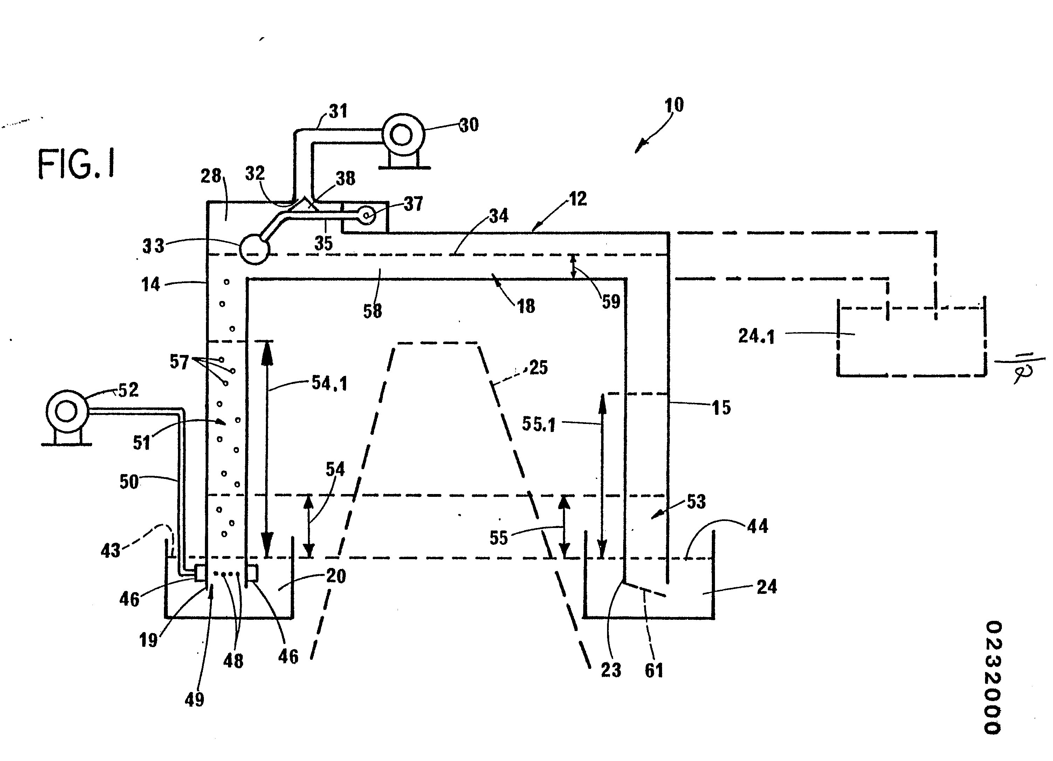

Another application of the invention would be in the conveying of relatively delicate solids suspended within a liquid, usually water. The invention has particular applications for transferring fruit or vegetables within a food processing plant from a lower location to a higher location, or between locations spaced horizontally apart as is also shown in the Fig. 1 embodiment.

A materials handling apparatus 64 according to the invention has a conduit 65 having inlet and outlet portions 66 and 67 respectively, interconnected by an apex means 68. The inlet portion is essentially vertical and has an open lower end 71 immersed in a first body of liquid/solid mixture 72 having an upper surface 73. The outlet portion 67 has an open lower end 77 immersed in a second body of liquid/solid mixture 79 having an upper surface 80. The bodies of liquids 72 and 79 contain solids 78 and are shown in respective first and second containers 82 and 83. The container 83 has an upwardly sloping conveyor belt 85 which receives solids discharged from the open end 77, while water leaves the container 83 through a return conduit 87 for returning the water separated from the solids to the container 72 for re-cycling if desired. The conduit 87 can have a valve 86 to control flow from the container 83 to the container 82.

The apex means 68 is preferrably a "cyclone" separator 88 which has an inlet port 89 connected to the inlet portion 66, and a discharge port 91 communicating with the outlet portion 67. The separator 88 has a gas receiving chamber 90 adjacent an uppermost portion thereof, the chamber also having an upper suction port 93 communicating through a suction line 95 with a valve 97 and a vacuum pump 98. A sensing means 100 has a float 102 or other means responsive to a level 104 of liquid within the separator. The sensing means 100 is connected by connecting means 101, which can be electrical, pneumatic or mechanical linkages, to the valve 97 so that the valve 97 starts to close when liquid within the separator attains a particular predetermined or equilibrium level 104, which is equivalent to the level 34 in Figure 1. Similarly to the Figure 1 embodiment, the equilibrium level 104 can be attained to produce an essentially continuous flow of liquid across the apex means 68. The upper surfaces 73 and 80 of the first and second bodies of liquid respectively are spaced below the particular liquid level 104 by first and second distances 106 and 107 respectively.

An air compressor 110 has a discharge line 112 passing through a valve 114 and is adapted to supply pressurized gas or air to a perforated aeration means 116. The means 116 is a hollow body spaced vertically below and aligned with the open end 71 of the inlet portion 66, and has a plurality of perforations 117 in the upper surface thereof. The perforations are of a sufficiently small size i.e., about 3 - 10 mm to discharge air as a stream of bubbles 118 into the inlet portion 66. Similarly to the aeration means 48 associated with the annular manifold 46 in Figure 1, the aeration means 116 receives a supply of pressurized air and communicates with the inlet portion to generate and discharge gas bubbles up the inlet portion to the apex means so as to reduce effective density of liquid in the inlet portion. The vacuum pump 98 is equivalent to the vacuum pump 30 of Figure 1, and serves as an evacuation means cooperating with the gas receiving chamber 90 adjacent the suction port 93. Clearly, the second body of liquid 79 serves as a sealing means cooperating with the outlet portion 67 for sealing the conduit 64 against atomosphere. A hinged flap valve 120 can be used to seal the outlet portion 67 against reverse flow should the aeration means 116 fail.

As can be seen from above, the operation of the second embodiment of the invention is basically similar to that of the first, with the exception that the liquid in the inlet portion contains the solids 78 held in suspension, and the conveyor 85 serves as a separating means provided adjacent the outlet means for separating the solids from the liquid. The conveyor transports the solids 78 to a location remote from the second body of liquid, and the liquid drained from the conveyor can be returned to the container 82, through the conduit 87 if desired.

In summary, in both embodiments it can be seen that the method according to the invention includes the steps of immersing the inlet portion into a first body of liquid so as to seal the inlet portion with the liquid, and sealing the outlet means against atmosphere. The next step involves withdrawing gas from the apex means to reduce pressure in the conduit so as to draw a column of liquid essentially vertically up the inlet portion, to pass the apex to form an essentially continuous path of liquid extending between the inlet and outlet portions. The method also includes admitting gas bubbles into the inlet portion in an amount sufficient to reduce effective density of at least a portion of liquid in the inlet portion, so as to induce a flow of liquid up the inlet portion so that the flow passes the apex means and is discharged through the outlet portion. Essentially simultaneously gas is evacuated from the apex means which would otherwise tend to collect from the bubbles, so as to provide the continuous path of liquid which maintains the flow of liquid from the inlet portion to the outlet portion.

It can be seen that the upper surface 73 of the first body of liquid 72 is spaced vertically below the liquid level 104 in the apex means by the first distance 106, and the upper surface 80 of the second body of liquid 79 is spaced vertically below the liquid level 104 in the apex means by the second distance 107. The difference in vertical height between the first and second bodies of liquid is limited, as in most suction pump installations, as follows. The first and second distances 106 and 107 define a ratio of distances which is less than ratio of average density of liquid, or a liquid/solid mixture, in the outlet and inlet portions respectively. In other words:

distance 106 : distance 107

is less than

average density in conduit 67 : average density in conduit 66

It is anticipated that some careful adjustment and control of air flow would be required to ensure that the flow of air into the aeration means 49 (Figure 1) or 116 (Figure 2) is in an amount no greater than that that can be removed by the vacuum pump 30 (Figure 1) or 98 (Figure 2) respectively. Clearly, if excessive air builds up in the air receiving chamber in the apex means, there would be a restriction of flow of liquid between the inlet and outlet portions, which, if was completely restricted by the amount of air in the apex means, would stop flow of liquid through the conduit. Unless the flap valves 61 or 120 were fitted, if the aeration means 49 or 116 stopped producing sufficient bubbles to maintain the density ratio above, a natural syphon could occur with a reverse flow from the second body of liquid to the first body of liquid, assuming the second body was higher than the first body.

Breckner 3 Eu/w

## CLAIMS

1.  An apparatus (10, 64) for pumping a liquid, the apparatus having: a conduit (12, 65) to contain the liquid, the conduit having an inlet portion (14, 66) and an outlet portion (15, 67), the inlet portion being exposed to a first body of liquid (20, 72) and having a gas receiving chamber (28, 90) adjacent an uppermost portion of the inlet portion; aeration means (49, 116) communicating with the inlet portion to generate and discharge gas bubbles (57, 118) up the inlet portion to the gas receiving chamber so as to reduce effective density of liquid in the inlet portion; evacuation means (30, 98) communicating with the gas receiving chamber to reduce pressure in the conduit so as to draw liquid up the conduit and to remove gas adjacent the apex means, which gas would otherwise tend to accumulate from the gas bubbles; and sealing means (24, 61; 79, 120) cooperating with the outlet portion for sealing the conduit against atmosphere, the apparatus being characterized by;

(a) the inlet portion (14, 66) being essentially vertical,

(b) an apex means (18, 68) interconnecting the inlet portion (14, 66) and the outlet portion (15, 67) to permit liquid to flow therebetween, and being disposed above the inlet and outlet portions,

(c) the aeration means (49, 116) being adapted to receive a supply of pressurized gas (52, 110).

2.        An apparatus as claimed in Claim 1 further characterized by:

(a)   gas delivery means (52, 51; 110, 112) cooperating with the aeration means (49, 116) to supply and control a flow of pressurized gas to the aeration means in a quantity sufficient to reduce the effective density of liquid in the inlet portion (14, 66) so as to cause a flow of liquid in the inlet portion to the outlet portion (15, 67) with adequate removal of gas from the apex means (18, 68).

3.        An apparatus as claimed in Claim 1 further characterized by:

(a)   the sealing means being a second body of liquid (24, 79) into which a lower end of the outlet portion (15, 67) is immersed to seal against atmosphere.

4.        An apparatus as claimed in Claim 1 further characterized by:

(a)   sensing means (33, 100) cooperating with the apex means (18, 68) and being responsive to liquid level (34, 104) in the apex means,

(b)   suction means (38, 97) cooperating with the evacuation means (30, 98) and the sensing means (33, 100) to control pressure within the conduit (12, 65) so that gas is removed from the conduit in a quantity sufficient to maintain an essentially continuous path of liquid (58) between the inlet portion (14, 66) and the outlet portion (15, 67), so as to cause a flow of liquid from the inlet portion to the outlet portion, with adequate removal of gas from the apex means.

- 17 -                                    0232000

5.      An apparatus as claimed in Claim 4 further characterized in that:

(a)   the sensing means includes a float (33, 102) adapted to float adjacent the surface of liquid (34, 104) within the apex means (18, 68) so as to respond to changes in liquid level in the apex means, so that if the liquid level rises or drops excessively, suction is decreased or increased respectively to maintain a desired liquid level in the apex means.

6.      An apparatus as claimed in Claim 1 further characterized by:

(a)   the first body of liquid (72) having an upper surface (73) spaced below a particular liquid level (104) in the apex means (68) by a first distance (106),

(b)   the sealing means being a second body of liquid (79) into which a lower end of the outlet means (67) is immersed to seal against the atmosphere, the second body of liquid having an upper surface (80) spaced vertically below the liquid level in the apex means by a second distance (107),

(c)   the first and second distances defining a ratio of distances (106: 107) which is less than ratio of average densities of liquid or liquid mixture in the outlet and inlet portions respectively.

7.      An apparatus as claimed in Claim 1 further characterized by:

(a)   the liquid contains solids (78) held in suspension which provide a liquid/solid mixture,

(b)   separating means (85) are provided adjacent the outlet portion (67) for separating the solids from the liquid,

(c) return conduit means (87) to receive liquid separated from the solids (78) of the liquid/solid mixture at the outlet portion (67), and to return the separated liquid to the first body of liquid (72).

8. A method of pumping liquid through a conduit (12, 65) having an inlet portion (14, 66) and an outlet portion (15, 67), the method including the steps of: immersing the inlet portion into a first body of liquid (20, 72) so as to seal the inlet portion with a liquid; sealing the outlet portion against atmosphere; withdrawing gas from an upper portion (28, 90) of the inlet portion to reduce pressure in the conduit so as to draw a column of liquid up the inlet portion; admitting gas bubbles (57, 118) into the inlet portion in an amount sufficient to reduce effective density of at least a portion of liquid in the inlet portion, so as to induce a flow of liquid and gas up the inlet portion; and essentially simultaneously evacuating gas from the upper portion (28, 90) of the inlet portion that would otherwise collect from the bubbles, the method being characterized;

(a) positioning the inlet portion (14, 66) to be essentially vertical,

(b) interconnecting the inlet portion (14, 66) to the outlet portion (15, 67) with an apex means (18, 68) which is disposed above the inlet and outlet portions so that liquid drawn up the inlet portion passes the apex means to form an essentially continuous path of liquid (58) which is discharged through the outlet means,

(c) supplying gas under pressure to the inlet portion (14, 66) to generate the bubbles.

9.    A method as claimed in Claim 8 further characterized by:

(a)    immersing the outlet portion (15, 67) in a second body of liquid (24, 79) so as to seal the outlet portion against atmosphere,

(b)    drawing liquid up the outlet portion (15, 67) from the second body of liquid (24, 79) to assist in forming the continuous path of liquid (58),

(c)    detecting an excessively high level or an excessively low level of liquid (34, 104) at the apex means (18, 68),

(d)    reducing or increasing respectively rate of removal of gas from the apex means (18, 68) so as to maintain a desired level of liquid (59, 104) at the apex means.

10.    A method as claimed in Claim 8 in which the first body of liquid (72) contains solids (78) held in suspension, and the method is further characterized by:

(a)    separating the solids (78) from the liquid/solid mixture adjacent the outlet portion (67),

(b)    transporting the solids (78) discharged at the outlet portion (67) to a location remote from the body of liquid,

(c)    returning the liquid separated from the liquid/solid mixture to the first body of liquid (72).

FIG.1

FIG.2

0232000

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 051 571 (COSSU)  * Figures; page 7, lines 18-20; page 8, line 3 - page 9, line 10; claim 1 * | 1-3,6, 8 | F 04 F 1/18  A 01 K 79/00 |
| Y |  | 4,5,7, 9,10 |  |
| Y | US-A-3 287 068 (KIMMERLE)  * Figures 1-4; column 3, lines 59-74 * | 4,5,9 |  |
| A |  | 7,10 |  |
| A | US-A-4 558 990 (ROACH)  * Figures 1,2; abstract * | 1,7,8, 10 | **TECHNICAL FIELDS SEARCHED (Int. Cl.4)** |
| Y | NL-A- 275 329 (MOTOR CONDENSATOR SCHLOSZ)  * Figures 1,2 * | 7,10 | F 04 F  E 02 B  A 01 K |
| A | BE-A- 521 726 (KRALOVE) |  |  |
| A | US-A-4 514 977 (BOWEN)  -/- |  |  |

The present search report has been drawn up for all claims

| Place of search | Date of completion of the search | Examiner |
|---|---|---|
| THE HAGUE | 23-04-1987 | THIBO F. |

European Patent Office

**EUROPEAN SEARCH REPORT**

| | DOCUMENTS CONSIDERED TO BE RELEVANT | | Page 2 |
|---|---|---|---|

| Category | Citation of document with indication. where appropriate, of relevant passages | Relevant to claim | CLASSIFICATION OF THE APPLICATION (Int. Cl.4) |
|---|---|---|---|
| A | PATENT ABSTRACTS OF JAPAN, vol. 7, no. 265 (M-258)[1410], 25th November 1983; & JP-A-58 144 020 (AKIYUKI FUJINAKA) 27-08-1983<br><br>----- | | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 23-04-1987 | THIBO F. |